# EUROPEAN PATENT APPLICATION

(11) **EP 4 521 075 A1**
(43) Date of publication of application: **12.03.2025**
(21) Application number: 23195905.7
(22) Date of filing: 07.09.2023
(51) Int. Cl.: G01F 15/14, G01F 15/18, G01F 15/06, G01F 15/12

(54) **FLUID MONITOR AND FLUID MONITOR ASSEMBLY**

(71) Applicant: MANN+HUMMEL Ventures Pte. Ltd., Singapore 139234 (SG)
(72) Inventor: GOH, Yeow Ho Joseph, 139234 Singapore (SG); LIM, Kee Ann, 139234 Singapore (SG); HE, Meihong, Shenzhen, 518129 (CN)
(74) Representative: Mann + Hummel Intellectual Property

(57) **Abstract**

A fluid monitor for measuring flow of a fluid, including: a housing including a shell including a lower end for cooperating with a conduit; an inset board configured to be installed in the housing by inserting from the lower end; a monitor circuit board arrangeable between the inset board and the shell, wherein the inset board and an inner portion of the shell may be configured so that a perimeter of the inset board contacts the inner portion of the shell forming a fluidly tight connection when the inset board may be installed in the shell and forming a fluidly tight cavity for housing the monitor circuit board; wherein in installed configuration, the inset board is at a distance of the lower end of the housing, thereby providing a lower volume for receiving the conduit A fluid monitor assembly including the fluid monitor and a conduit block, the conduit block including: a conduit for allowing flow of fluid; and a connection surface configured to be cooperably attached to a corresponding connection surface of the lower end of the housing.

## Description

### Technical Field

An aspect of the disclosure relates to a fluid monitor for measuring flow of a fluid. Another aspect of the disclosure relates to a fluid monitor assembly.

### Background Art

Water monitors, including electronic monitors that monitor flow of water for building point of entry are known. Also, point of entry water filtration systems are known, with some basic electronic functionality, for example backwash. However, these monitors and assemblies have limited functionality, for example only measure flow, and their housing is either of cumbersome handling when maintenance access to an internal circuit board is needed. Furthermore, some of these monitors are not waterproof, despite being for measurement of water flow.

Therefore, there exists a need to provide for improved fluid monitor and monitor assembly.

### Summary

An aspect of the disclosure relates to a fluid monitor for measuring flow of a fluid, e.g., water. The fluid monitor may include a housing including a shell. The shell may include a lower end for cooperating with a conduit, the lower end may be open when not attached to the conduit. The conduit may be part of a conduit block that is insertable in the shell's opening. The conduit block may include valve(s) and/or sensor(s).

The fluid monitor may include an inset board configured to be installed in the housing by inserting from the lower end. The inset board may be configured to hold a monitor circuit board. The inset board may be affixed to the housing by fastening means.

The fluid monitor may include a monitor circuit board arrangeable between the inset board and the shell. The monitor circuit board may be configured to be attached to the inset board and to be placed within the housing as the inset board may be inserted in the shell.

According to various embodiments, the inset board and an inner portion of the shell may be configured so that a perimeter of the inset board contacts the inner portion of the shell forming a fluidly tight connection when the inset board may be installed in the shell. Thereby a fluidly tight cavity may be formed for housing the monitor circuit board. The inset board and the inner side of the shell may have comforming geometries, for example, such that as the inset board is pushed upwards (i.e., into the housing), a gap between the inset board's perimeter and the inner side (of the inner portion) of the shell gets smaller and the connection is tighten up.

According to various embodiments, a cross section of the shell may become larger towards the lower end for facilitating insertion and removal of the inset board.

According to various embodiments, the inner portion of the shell may include an inner portion for contacting the perimeter of the inset board. The inner portion may be tapered in a direction away from the lower end, thus the inner cross section gets smaller with distance to the lower end. That allows for increasing a contact pressure between the perimeter of the inset board and the shell during insertion the inset board in the shell.

in installed configuration, the inset board may be at a distance of the lower end of the housing, thereby providing a lower volume for receiving the conduit. At a distance may mean spaced apart, for example, the distance may be greater than zero, and may include the meaning of greater than 5 cm, and may also include the meaning of less than 30 cm. The portion of the shell that remains between the fully inserted inset board and the opening of the shell is named herein as overhang. The overhang may provide one or more of: a lower volume for accommodating the conduit, a lower volume for accommodating the cables, an additional separation of the electronics from fluid, portions of valves and/or connectors that may protrude from the conduit and/or from the inset board. Thus, the inset board is spaced apart from the conduit when the inset board is fully inserted and the housing is cooperably attached to the conduit.

According to various embodiments, the side wall of the shell may include a planar section that extends as a plane from a position below the inset board (i.e., close to the lower end) to a position above the monitor circuit board. Thereby sufficient shell area is provided for fixing a pass through power connection, e.g., a connector.

According to various embodiments, the shell may include a socket which connects power from exterior to the fluidly tight cavity. The socket may be arranged in the planar section and, optionally, above the monitor circuit board. The socket may be cooperably to receive a pair of pins or a plug that may be attached to the monitor circuit board.

According to various embodiments, the side wall of shell may include a curved section, which extends from the planar section to an upper plate. The curved section may increase structural stability and decrease deformability of the upper portion. For example, during use, a user may lean on the fluid monitor, or use force when attaching/detaching power connectors, or also water connections during installation. Further, pressure/tension may be ex-erted when installing/removing the inset board from the shell.

According to various embodiments, the inset board may include an extraction anchor point which may be accessible from the lower end. The extraction anchor point may be in the form of a hole, e.g., a blind hole. The extraction anchor point may be in the form of a blind hole comprising an inner thread or other type of engageable feature.

According to various embodiments, the inset board may include a base and a sealing element that complementarily fits onto the base. The sealing element may cooperate with the base such that it is kept in place in relation to the base when the inset board is being inserted into the shell.

According to various embodiments, the complementary fitting may be provided by protrusions in one of the base and the sealing element, and recesses by the other one of the base and the sealing element.

According to various embodiments the sealing element may include ribs extending along the perimeter.

According to various embodiments, the top portion may include indicia. The indicia may be formed by semitransparent regions of the top portion. The term semitransparent includes the meaning of allowing light from LEDs from the inside to be seen on the outside. Thus, a wall of the top portion (i.e., top portion thickness) may be made thinner than the lateral wall (or shell) of the housing, for allowing the transparency, which may be at least partially compensated by the increased structural stability provided by the curved section of the shell. In examples, the top may be made thinner for providing transparence, and/or the top may be welded on, thus a different material may be provided as the opaque sidewall.

An aspect of the disclosure relates to a fluid monitor assembly including the fluid monitor in accordance with various embodiments, and a conduit block. The conduit block may include a conduit for allowing flow of fluid. The conduit block may include a connection surface configured to be cooperably attached to a corresponding connection surface of the lower end of the housing. The conduit may include one or more of: fluid channel(s), inlet(s)/outlet(s), sensor(s), filter socket(s). The fluid monitor assembly may comprise the conduit block and the fluid monitor attached to each other.

According to various embodiments, the fluid monitor assembly, may further include a sensor and/or a valve wherein the sensor and/or the valve is or may be electrically connected to the monitor circuit board via cable(s) arranged in the lower volume of the housing.

According to various embodiments, the conduit block may further include a first connection element on its lower side for receiving a water filter.

According to various embodiments, the water filter may include a second connection element for connecting with the first connection element, optionally by a screw connection, or a bayonet connection.

According to various embodiments, the fluid monitor assembly may further include the water filter.

### Brief Description of Drawings

The drawings show in:
FIG. 1, a fluid monitor 100 in accordance with various embodiments;
FIG. 2A, a cross section cut A-A' of the fluid monitor 100 of FIG.1;
FIG. 2B, a magnified portion for ease of understanding the inset board 120 in installed configuration in the shell 112;
FIG. 3A, a magnified portion of the inset board 120, showing a top side of a blind hole forming an extraction anchor point 160;
FIG. 3B, a magnified portion of a protrusion 127 that is part of the interlocking fit between the sealing element 126 and the base 121; and in
FIG. 4, a fluid monitor assembly 10 including the fluid monitor 100 and a conduit block 200 installed in the fluid monitor 100.

### Detailed Description

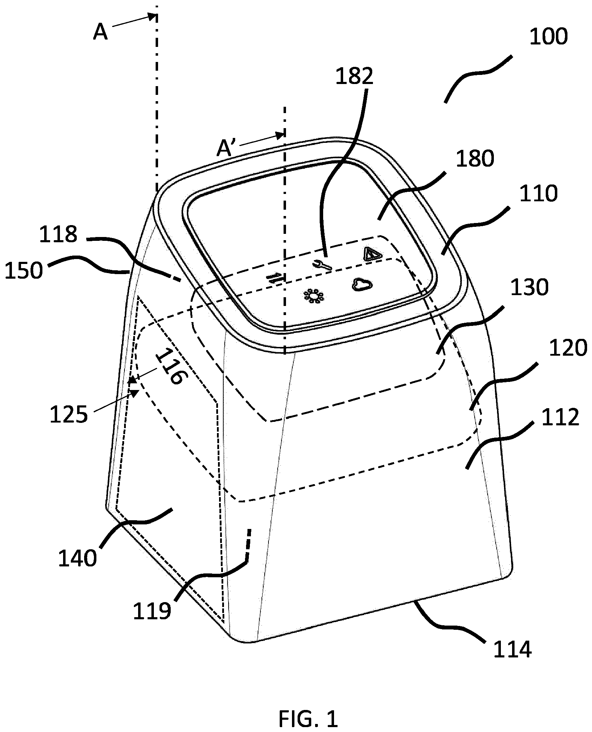

FIG. 1 shows a fluid monitor 100 in accordance with various embodiments. The fluid monitor 100 may include a housing 110 including a shell 112. The shell may include a lower end 114 for cooperating with a conduit. The lower end may be open when not attached to the conduit. The conduit may be part of a conduit block that is insertable in the shell's opening. The conduit block may include valve(s) and/or sensor(s).

The fluid monitor 100 may include an inset board 120 configured to be installed in the housing 110 by inserting from the lower end 114 The inset board 120 may be configured to hold a monitor circuit board 130. The inset board 120 may be affixed to the housing 110 by fastening means.

The fluid monitor 100 may include a monitor circuit board 130 arrangeable between the inset board 120 and the shell 112. The monitor circuit board 130 may be configured to be attached to the inset board 120 and may further be configured to be placed within the housing 110 as the inset board may be inserted in the shell 112.

The inset board 120 and an inner portion 116 of the shell 112 may be configured so that a perimeter 125 of the inset board 120 contacts the inner portion 116 of the shell 112 forming a fluidly tight connection when the inset board 120 is installed in the shell 112, thus forming a fluidly tight cavity 118 for housing the monitor circuit board 130.

in installed configuration, the inset board 120 may be at a distance of the opening (lower end of the shell). At a distance means spaced apart, wherein the distance may be greater than zero, and may include the meaning of greater than 5 cm, and may also include the meaning of less than 30 cm. The overhang portion of housing that hangs over the inset board, downwards towards the of the lower end 114 of the housing 110 (opening of the shell), provides lower volume 119 for example for receiving the conduit, the cables, additional separation of the electronics from fluid, and/or portions of valves and connectors that may protrude from the conduit or the inset board. Thereby the inset board 120 is spaced apart from the conduit when the housing 110 is cooperably attached to the conduit.

According to various embodiments, a cross section of the shell 112 becomes larger towards the lower end 114 for facilitating insertion and removal of the inset board 120.

According to various embodiments, the inner portion of the shell 112 may include an inner portion 116 also named herein as circumferential contact surface for contacting the perimeter 125 of the inset board 120, and wherein the inner portion 116 may be tapered in a direction away from the lower end 114 (for example, the inner cross section gets smaller with distance to the lower end) for increasing a contact pressure between the perimeter 125 of the inset board 120 and the shell 112 during insertion the inset board 120 in the shell 112.

According to various embodiments, the side wall of shell 112 may include a planar section 140 that extends as a plane 140 from a position below the inset board 120 (e.g., closer to the lower end) to a position above the monitor circuit board 130. The flat portion above the monitor circuit board provides sufficient area for fixing a pass through power connection and/or connector.

According to various embodiments, the side wall of shell 112 may include a curved section 150, which extends from the planar section 140 to an upper plate. The curved section 150 may increase structural stability and decrease deformability of the upper portion. For example, during use, a user may lean on the fluid monitor 100, or use force when attaching/detaching power connectors, or also water connections during installation to the conduit (which conduit in turn transfers force to the fluid monitor 100). Further, pressure/tension may be exerted when installing/removing the inset board 120 from the shell 112.

According to various embodiments, the top portion may include indicia 182. in an example, the indicia 182 may be formed by semitransparent regions of the top portion 180, thus allowing light from LEDs from the inside to be seen on the outside. Thus, a wall of the top portion 180 (i.e., top portion thickness) may be made thinner than the lateral wall (or shell 112) of the housing, for allowing the transparency, which may be at least partially compensated by the increased structural stability provided by the curved section 150 of the shell. In examples, the top portion 180 may be made locally thinner for providing transparence, and/or the top portion 180 may be welded on, thus a different material may be provided as the opaque sidewall.

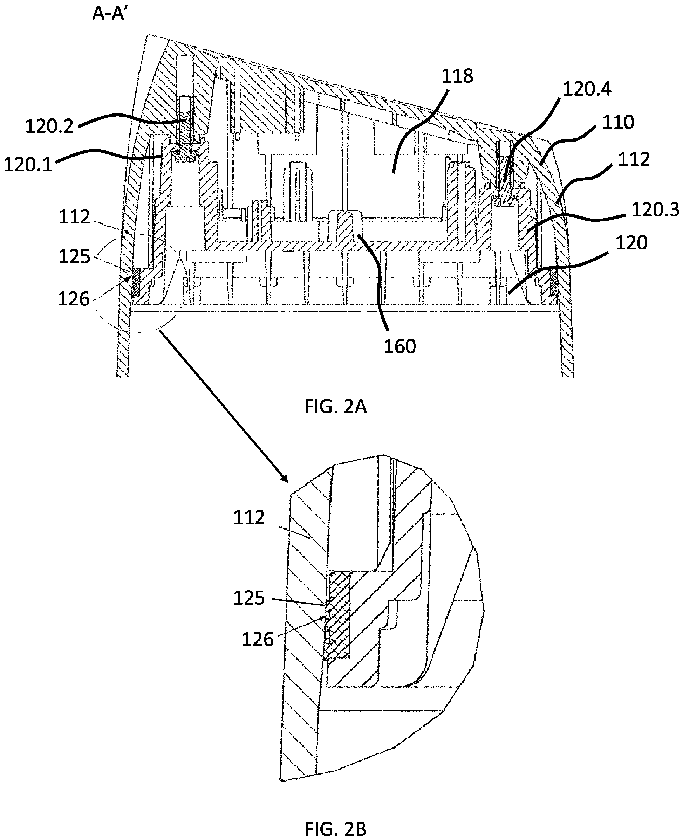

FIG. 2A shows a cross section cut A-A' of the housing 110 of the fluid monitor 100 of FIG. 1. Only a portion of the overhang is shown. In the cut view, the thickness of the wall of the shell 112 can be seen. The inset board 120 can be seen in the inserted configuration. In the inserted configuration the inset board 120 may be at a topmost position, for example, being determined by stoppers 120.1, and 120.3 that may also serve as screw guides for screws 120.2 and 120.4. The screws assist in fixing the inset board 120 in position therefore ensuring the isolation of the fluidly tight cavity 118 from water and/or moisture. The number of stoppers and/or screws is not limited to 2.

FIG. 2B shows a magnified portion for ease of understanding the inset board 120 in installed configuration in the shell 112. As can be seen, the most left side of the inset board 120 has a perimeter 125 formed by the sealing element 126 which contacts an inner portion of the shell 112.

According to various embodiments, the shell 112 may include a socket 135 which connects power from exterior to the fluidly tight cavity 118, the socket 135 being arranged in the planar section 140 and, optionally, above [direction away from 114, and cooperably to receive a pir of pins or a plug 136 that may be attached to the board 130] the monitor circuit board 130.

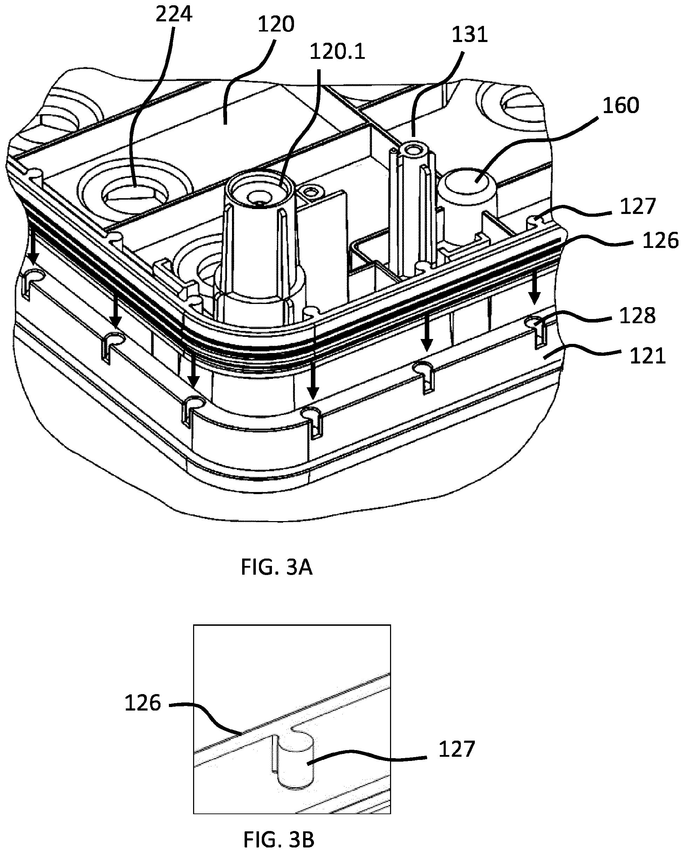

FIG. 3A shows a magnified portion of the inset board 120 showing its top side. A a top side of a blind hole sleeve forming an extraction anchor point 160 can be seen. The blind hole sleeve may be attached to a bottom side of a base 121 of the inset board 120, to allow for access, and may be monolithically formed with a base 121 of the inset board 120 including bottom. The blind hole sleeve may be further attached to one or more support ribs, which extend from the sleeve to a side of the base 121. The ribs may be monolithically formed with the sleeve and the base 121, for example, during a same injection molding process.

According to various embodiments, the inset board 120 may include a base 121 and a sealing element 126 that complementarily e.g., interlinkingly fits onto the base 121.

According to various embodiments, the complementary fit may be provided by protrusions 127 in one of the base 121 and the sealing element 126, and recesses 128 by the other one of the base 121 and the sealing element 126.

According to various embodiments the sealing element 126 may include ribs extending along the perimeter undulated profile in vertical direction.

FIG. 3A also shows a sealing element 126 in detached from the base 121, and insertable in the base 121 in the direction of the arrows. The sealing element 126 includes protrusions 127 which are complementary to recesses 128 of the base 121. When the sealing element 126 is inserted into the base 121, the protrusions 127 are fit, e.g., snug fit, into the recesses 128. The recesses and protrusions form a complementary fit, and may be provided the other way around, namely the protrusions may be in the base 121 and the recesses may be in the sealing element 126. More generally and in accordance with various embodiments, the sealing element 126 is attached to the base 121 by positive-locking connections which are created by the interlocking of the connecting partners, such as complementary protrusions and recesses. In the example of FIG. 3A, the protrusion 127 cannot slip sideways away from the base 121 because the two interlock at the edge.

FIG. 3B shows a magnified portion of a protrusion 127 that is part of the interlocking fit between the sealing element 126 and the base 121.

According to various embodiments, the inset board 120 may include an extraction anchor point 160 which may be accessible from the lower end 114, optionally in the form of a blind hole, which may further optionally may include a thread or other type of engageable feature while still being fluidly tight.

According to various embodiments, the inset board 120 may comprise structures for receiving and holding the monitor circuit board 130 in place, such as screw hole 131, which may be elevated from the bottom of the base 121.

According to various embodiments, the inset board 120 may comprise one or more electrical transmission points 224, such as electrical sockets, each comprising at least 2 wires, for allowing connection between the monitor circuit board 130 and sensors and/or valves.

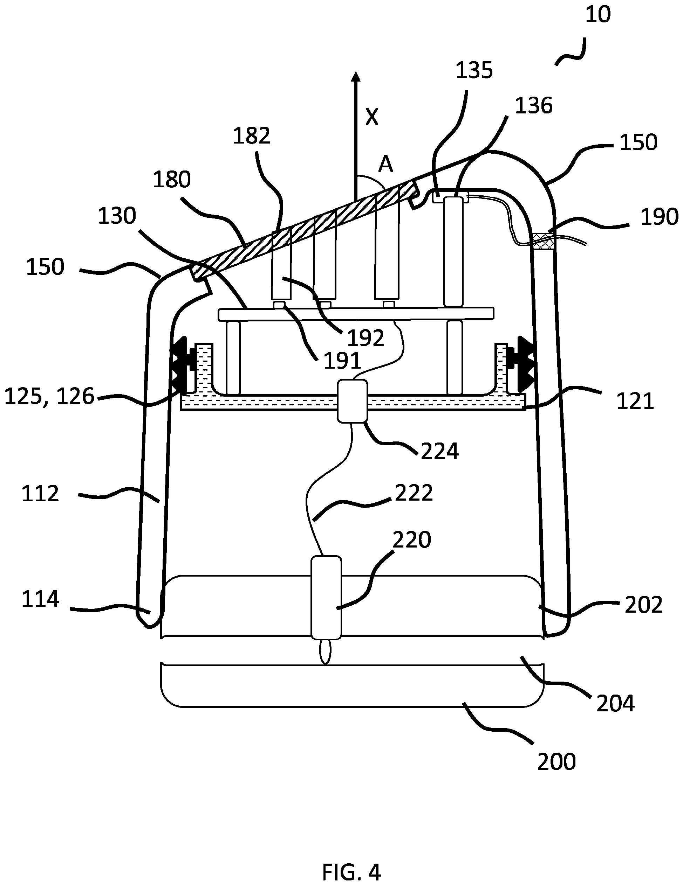

FIG. 4 shows a fluid monitor assembly 10 including the fluid monitor 100 and a conduit block 200 installed in the fluid monitor 100 in a cross-sectional schematic view.

As can be seen, the shell 112 includes a lower end 114 for cooperating, e.g., receiving, the conduit 204, in this example in a conduit block 200.

As shown in FIG. 4, the side wall of shell 112 may include a curved section 150, which extends from the planar section 140 to a top portion 180 (also named herein as upper plate). The top portion 180 may be a plate that is welded onto the shell 112. That allows for the shell 112 and the top portion 180 being produced by different methods, giving more degrees of freedom for production. For example, the top portion 180 may be much thinner than then wall thickness of the shell 112, Thus, a wall of the top portion 180 (i.e., top portion thickness) may be made thinner than the lateral wall (or shell 112) of the housing, for allowing the transparency. The top portion 180 may comprise an opaque layer, which comprises interruptions delimiting the indicia 182.

According to various embodiments, the top portion 180 may at an angle A greater than 90 degrees in relation to an axis X of the shell 112. The axis X is a vertical line from a lower end to an upper end. This allows for easier seeing the indicia when the fluid monitor is installed.

The inner portion of the shell 112 is configured to receive the inset board 121, which may be configured as a carrier and support for the monitor circuit board 130. The inset board 120 and an inner portion of the shell 112 may be configured so that a perimeter 125 of the inset board 120 contacts the inner portion of the shell 112 forming a fluidly tight connection when the inset board 120 is installed in the shell 112, thus forming a fluidly tight cavity for housing the monitor circuit board 130. The perimeter may be formed by a sealing element 126. The sealing element 126 may be attached to a base 121 of the inset board 120, for example by an interlocking connection.

As shown, the cross section of the shell 112 becomes larger towards the lower end 114 for facilitating insertion and removal of the inset board 120.

According to various embodiments, the conduit block 200 may include a conduit 204 for allowing flow of fluid. For example, the conduit 204 may be a horizontal hole (e.g., a bore) comprising an inlet and an outlet and allowing passage of water.

According to various embodiments, the conduit block 200 may include a connection surface, e.g. perimeter surface 202 configured to be cooperably attached to a corresponding connection surface e.g., corresponding perimeter surface of the lower end of the housing 110.

According to various embodiments, other than the conduit 204, the conduit block 200 may include other fluid channels, inlets/outlets, sensors and/or, filter sockets.

According to various embodiments, the fluid monitor assembly 10, may further include a sensor and/or a valve 220 wherein the sensor and/or the valve 220 is or may be electrically connected to the monitor circuit board 130 via cables 222 arranged in the lower volume 119 of the housing 110. The electrical connection may pass through the base 121 by cables or a coupling 224 (e.g., connector).

The monitor circuit board 130 may be attached to the inset board 120, and the inset board being installed in the shell 112, in a pre-determined position, so that a position of LEDs 191 included in the monitor circuit board 130 matches a position of the indicia. In one example, each of the LEDs 191 may have an associated light guide 192 for conveying its light to the indicia. In another example, not shown, an opaque separation wall may separate light from each of the LEDs to avoid leakage of light into a non-corresponding indicia. Both examples may be combined, or other means may be used for providing light to the indicia.

According to various embodiments, the side wall of the shell may include a planar section that extends as a plane from a position below the inset board (i.e., close to the lower end) to a position above the monitor circuit board. Thereby sufficient shell area is provided for fixing a pass-through power connection, e.g., a connector.

According to various embodiments, power to the monitor circuit board 130 may be provided by a pass-through power connection 190. FIG. 4 shows the pass-through power connection 190 at one of the sides of the shell, in this case the back side (right in the drawing) for ease of explanation. In another example, the pass-through power connection 190 may be provided at a lateral side, lateral to a front side, the front side (left in the drawing) being a side where the user has better visibility to the indicia. The provision at the side allows for easier replacement of a power plug, for example, in the case that the pass-through power connection 190 is provided as a connector, e.g., a socket.

According to some embodiments, the pass-through power connection 190 may be connected via a cable to the monitor circuit board 130, for example by using jumper cables. In other embodiments, an internal socket 135 may be provided which cooperates with pins 136 attached to the monitor circuit board 130, so that when the circuit board 130 is being inserted into the installation position (together with the inset board 120), the pins 136 connect to the socket 135 closing the power connection from the exterior of the housing to the monitor circuit boar 130.

## Claims

1. A fluid monitor (100) for measuring flow of a fluid, comprising:
a housing (110) comprising a shell (112) comprising a lower end (114) for cooperating with a conduit;
an inset board (120) configured to be installed in the housing (110) by inserting from the lower end (114);
a monitor circuit board (130) arrangeable between the inset board (120) and the shell (112),
wherein the inset board (120) and an inner portion (116) of the shell (112) are configured so that a perimeter (125) of the inset board (120) contacts the inner portion (116) of the shell (112) forming a fluidly tight connection when the inset board (120) is installed in the shell (112) and forming a fluidly tight cavity (118) for housing the monitor circuit board (130);
wherein in installed configuration, the inset board (120) is at a distance of the lower end (114) of the housing (110), thereby providing a lower volume (119) for receiving the conduit.

2. The fluid monitor (100) of claim 1, wherein a cross section of the shell (112) becomes larger towards the lower end (114) for facilitating insertion and removal of the inset board (120).

3. The fluid monitor (100) of claim 1 or claim 2, wherein the inner portion of the shell (112) comprises an inner portion (116) (aka circumferential contact surface) for contacting the perimeter (125) of the inset board (120), and wherein the inner portion (116) is tapered in a direction away from the lower end (114) for increasing a contact pressure between the perimeter (125) of the inset board (120) and the shell (112) during insertion the inset board (120) in the shell (112).

4. The fluid monitor (100) of any of the previous claims, wherein the side wall of shell (112) comprises a planar section (140) that extends as a plane (140) from a position below the inset board (120) to a position above the monitor circuit board (130).

5. The fluid monitor (100) of claim 4, wherein the shell (112) comprises a socket (135) which connects power from exterior to the fluidly tight cavity (118), the socket (135) being arranged in the planar section (140) and, optionally, above the monitor circuit board (130).

6. The fluid monitor (100) of claim 4 or claim 5, wherein the side wall of shell (112) comprises a curved section (150), which extends from the planar section (140) to an upper plate.

7. The fluid monitor (100) of any of the previous claims, wherein the inset board (120) comprises an extraction anchor point (160) which is accessible from the lower end (114), optionally in the form of a blind hole, which may further optionally include a thread.

8. The fluid monitor (100) of any of the previous claims, wherein the inset board (120) comprises a base (121) and a sealing element (126) that complementarily fits onto the base (121).

9. The fluid monitor (100) of claim 8, wherein the complementary fit is provided by protrusions (127) in one of the base (121) and the sealing element (126), and recesses (128) by the other one of the base (121) and the sealing element (126).

10. The fluid monitor (100) of claim 8 or claim 9, wherein the sealing element (126) comprises ribs extending along the perimeter.

11. The fluid monitor (100) of any of the previous claims, wherein the top portion comprises indicia (182), and the indicia (182) are formed by semitransparent regions of the top portion (180).

12. A fluid monitor assembly (10) comprising the fluid monitor (100) of claim 1 and a conduit block (200), the conduit block (200) comprising:
(i) a conduit (204) for allowing flow of fluid; and
(ii) a connection surface configured to be cooperably attached to a corresponding connection surface (e.g., corresponding perimeter surface) of the lower end of the housing (110).

13. The fluid monitor assembly (10) of claim 12, further comprising a sensor and/or a valve (220) wherein the sensor and/or the valve (220) is or are electrically connected to the monitor circuit board (130) via cable(s) (222) arranged in the lower volume (119) of the housing (110).

14. The fluid monitor assembly (10) of any of the previous claims, wherein the conduit block (200) comprises a first connection element on its lower side for receiving a water filter.

15. The fluid monitor assembly (10) of claim 14, further comprising the water filter, wherein the water filter comprises a second connection element for connecting with the first connection element, optionally by a screw connection, or a bayonet connection.
